# EUROPEAN PATENT APPLICATION

(11) **EP 1 271 990 A1**
(43) Date of publication of application: **02.01.2003**
(21) Application number: 02252848.3
(22) Date of filing: 23.04.2002
(51) Int. Cl.: H04Q 7/38

(54) **Method and apparatus for selecting a service provider depending on availability**

(30) Priority: 14.06.2001 US 882574
(71) Applicant: LUCENT TECHNOLOGIES INC., Murray Hill, New Jersey 07974-0636 (US)
(72) Inventor: Goss, Stephen C., Wheaton, Illinois 60187 (US); Hruska, George Jay, Naperville, Illinois 60540 (US); Light, Jeffrey Ross, Lincolnwood, Illinois 60646 (US); Liu, Chung-zin, Naperville, Illinois 60565 (US); Salvador, Omar Hernando, Wheaton, Illinois 60187 (US); Shah, Gitesh P., Naperville, Illinois 60565 (US); Stockert, Mark Kevin, 1107-02 Ardmore View (SG); Strom, Kenneth Wayne, Naperville, Illinois 60565 (US); Varvaro, Charles, Glendale Heights, Illinois 60139 (US); Wilson, Randall Joe, Naperville, Illinois 60540-6312 (US)
(74) Representative: Watts, Christopher Malcolm Kelway, Dr.

(57) **Abstract**

A method and apparatus for permitting a wireless telecommunicat-ions caller to use an alternate service provider if the primary service provider has no available bearer channels. If the primary service pro-vider has no available bearer channels for a call, that service provider sends a message to the caller's mobile station to switch its control channel to one of the control channels of an alternate service provider. The caller then attempts to complete the call over the facilities of the alternate service provider. Advantageously, spare facilities of the alternate service provider can be employed to good use; advantageously, the caller's service is improved because the call is not finally blocked when no bearer channels are available for the call.

## Description

### Technical Field:

This invention relates to arrangements for permitting a mobile station to complete a call even when no radio channels are available from the carrier serving that station.

### Problem:

When a mobile station originates a call, it communicates via a special control radio channel with a serving mobile switching center. That mobile switching center then assigns a radio communications channel, also known as a traffic channel or bearer channel, (hereinafter "bearer channel"), to that mobile station so that the mobile station can communicate with a cell site. The cell site is then connected by transmission facilities to the mobile switching center to route the call to a destination.

The bearer channels are a scarce resource. If no bearer channels are available between the mobile station and a cell site sufficiently close to that mobile station to communicate via an available bearer channel, then the call cannot be completed. The use of bearer channels varies dynamically, and, because only a moderate number of bearer channels can serve a mobile station when that station is in a particular location. The number of bearer channels which can be used to communicate with that station forms a relatively small, and therefore, inefficient group. As a result, the condition that "no bearer channels are available", occurs with considerable frequency whenever a wireless system serves a busy area and/or is tightly engineered.

A problem of the prior art, therefore, is that cellular calls are frequently blocked because of the unavailability of a bearer channel.

### Solution:

Applicants have further analyzed this problem. They have recognized that while a mobile station in the "Roamer" mode can access any of a plurality of authorized service providers, a mobile station that is in its "Home" area is designed to access a single service provider. There are major efficiencies in the processing of calls from mobile stations in their own areas, as opposed to mobile stations that are in the roamer mode, so that simply converting all mobile stations to a perpetual roamer mode is undesirable.

Moreover, while in the Roamer mode, wherein a mobile station may have access to several service providers, once the mobile station selects a service provider, if that service provider does not have any bearer channels available, the call cannot be completed.

Accordingly, Applicants have invented a new method and apparatus for alleviating the above problem by arranging that a mobile station which originates a call when its home service provider has no available bearer channels, can access an alternate service provider for the purpose of completing a call; after this call is completed, the mobile station reverts to its normal mode, wherein calls are served by the normal service provider. Advantageously, such an arrangement satisfies the caller's need to complete a call at the time when the call is dialed, and satisfies the service provider's need for providing service on most of the calls made by its customers.

In accordance with one preferred embodiment of Applicants' invention, when no bearer channels are available, the call is offered to another service provider. If that other service provider cannot complete the call, the call is terminated. Advantageously, with this arrangement, the caller has two chances to complete the call. Advantageously, since the absence of available bearer channels is an indication of heavy load, the amount of additional call processing load imposed on the service provi-der by this arrangement is kept to a reasonable minimum.

In accordance with one preferred embodiment, the service provider selects the alternate service provider. The alternate service provider is selected on the basis of an agreement between the two service providers that the alternate service provider will accept calls when it has available bearer channels.

In accordance with one preferred embodiment, the service provider signals to the mobile station with the identity of the control channels of the alternate service provider so that the mobile station can communicate with the alternate service provider.

In accordance with Applicants' preferred embodiment, once a call served by the alternate service provider has been terminated, the mobile station is restored to its normal mode, wherein it communicates via the control channels of the serving service provider. Advantageously, this arrangement guarantees that the normal service provider will complete calls except when it has no bearer channels available.

### Brief Description of the Drawing(s):

Figure 1 is a block diagram illustrating the basic operation of Applicants' invention; and
Figure 2 is a flow diagram illustrating the method of Applicants' invention.

### Detailed Description:

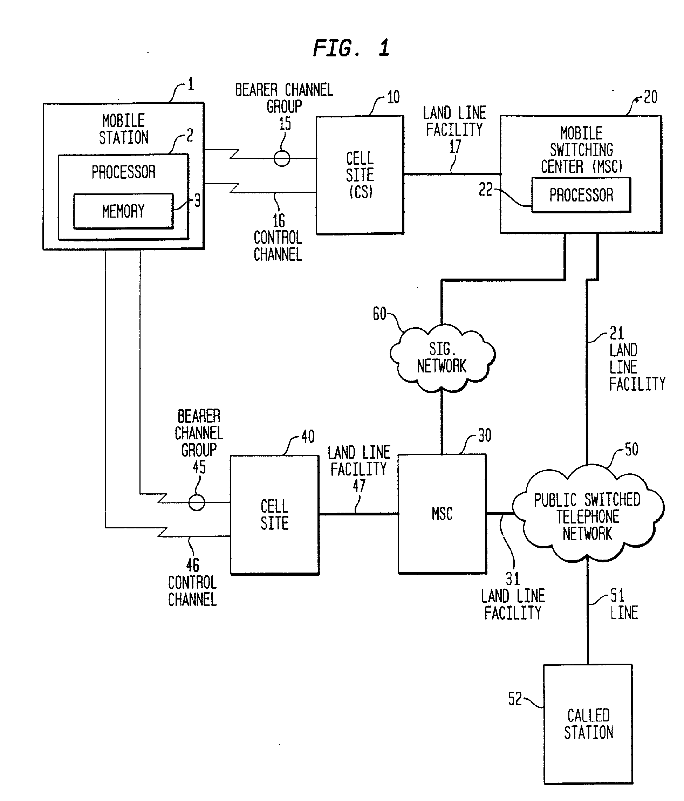

Figure 1 is a block diagram illustrating Applicants' invention. A Mobile Station (1) communicates with a Cell Site (10), which in turn, communicates with a Mobile Switching Center (MSC) (20). Operations of the MSC (20) are controlled by a processor (22). The links between Mobile Station (1) and Cell Site (10) are radio links. The Mobile Station communicates with the Cell Site via a Control Channel (16), (a Bearer Channel), and a one of a plurality of channels, hereinafter referred to as Bearer channels (15). The Mobile Station can always communicate over the Control Channel (16), even when no Bearer channels (15) are available. The Control Channel is used to signal the called directory number to the Cell Site, and is used by the Cell Site to tune the Mobile Station to an available Bearer Channel. The Cell Site is connected to a MSC (20), by a transmission facility (17), which does not rely on the availability of Bearer channels. The Cell Site sends the dialed telephone numbers to the Mobile Switching Center (MSC), and the (MSC) communicates to the Cell Site, call set-up information, such as the identity of the Bearer Channel to be used on a particular communication. The MSC is connected by another transmission Facility (21) to the Public Switched Telephone Network (PSTN) (50). The call is then completed in accordance with the principles of the prior art. Then, if the Called Station (52) is a Land-Line, it is connected to that called station by Line (51). If the called station is also a cellular station, then the Public Switched Telephone Network (PSTN) is used to interconnect the originating Mobile Switch (20) with a similar terminating Mobile Switch, which is then used for completing the call.

In accordance with Applicants' invention, when no provisioned Bearer Channels are available in the Group of Channels (15), connecting the Mobile Station to Cell Site (10), and no Bearer channels are available to other Cell Sites served by the Mobile Station's Primary Service Provider, then the Mobile Switching Center (MSC) (20) causes a re-direct signal to be sent to Mobile Station (1) over Control Channel (16) to cause Mobile Station (1) to re-direct its call to another Mobile Switching Center (MSC), such as MSC (30), the MSC of a different service provider. Details of the call are transmitted from MSC (20) to MSC (30) over Signaling Network (60). The MSC (20) signals to Mobile Station (1) over Control Channel (16) to use Control Channel (46), the Control Channel of the Alternate Service Provider. Thereafter, for this call, Mobile Station (1) is served by Cell Site (40), and MSC (30) of the Alternate Service Provider. MSC (20) provides the called telephone number and information for identifying Mobile Station (1) to MSC (30), which then is in control of the call. The normal mobile authentication process is followed to ensure that the MS is the MS identified by MSC (20). MSC (30) will then communicate via Control Channel (46) to Mobile Station (1), and attempt to set-up the call if any Channels are available in the Bearer Channel Group (45) between Cell Site (40) and Mobile Station (1).

For the sake of clarity, Applicants' have shown only a single cell site. As is well known to practitioners in the field, a mobile station, at any one time, may have access to more than one cell site. Further, the initial communication representing the dialed telephone number, may go to a different cell site than the cell site which ultimately serves the call.

When Mobile Station (1) is switched to a mode wherein it is served by an Alternate Service Provider, when the call is completed or otherwise terminated, the Mobile Station is restored to its normal mode so that when the Mobile Station originates a new call, it will originate that call using its normal Service Provider.

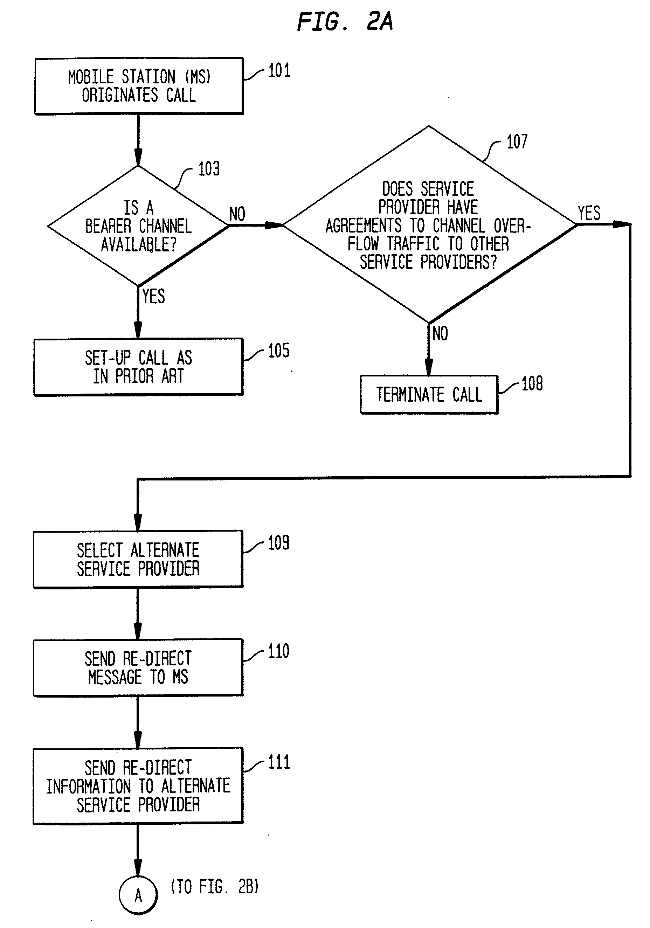

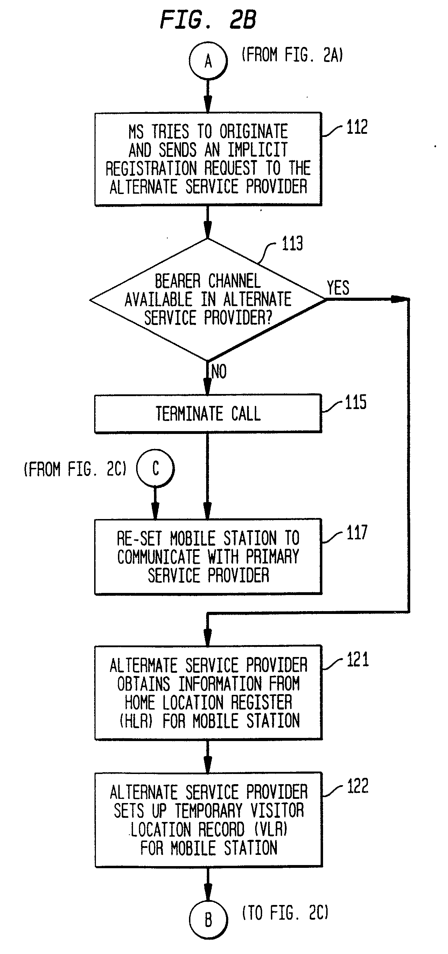

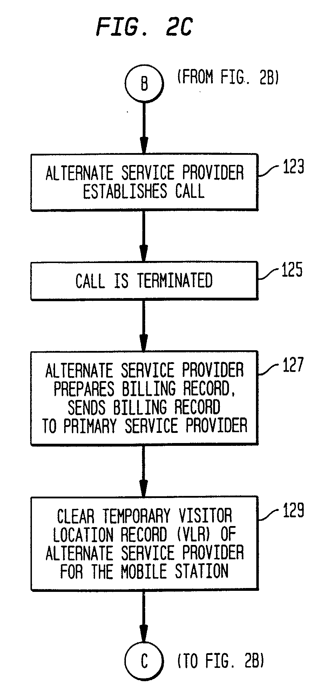

Figure 2 is a flow diagram illustrating the operation of Applicants' invention. A Mobile Station originates a call, Action Block (101). Test (103) is used to determine whether a Bearer Channel is available. If a Bearer Channel is available, then the call is set-up as in the prior art, Action Block (105). If no Bearer Channel is available, then Test (107) is used to determine if the Service Provider has Agreements with one or more Alternate Service Providers. If the Carrier has no such Agreements, then the call is terminated, Action Block (108). If the Service Provider has Agreements, then the Service Provider will select an Alternate Service Provider for this call, Action Block (109). The process of making this selection can be straightforward or complex. Of course, if there is an Agreement with a single Service Provider, then the selection process always selects that Service Provider. If the Primary Service Provider has arrangements with several Alternate Service Providers, then the Alternate Service Providers may be selected on the basis of traffic information from these Service Providers, including traffic information for the general area where the Mobile Station is currently found. Alternate Service Providers may also be selected on some simple percentage basis. Alternate Service Providers may also be selected on the basis of time of day and/or day of week because some Service Providers may handle primarily business traffic, and others may handle primarily residential traffic.

Once the Alternate Service Provider has been selected, the Primary Service Provider sends a re-direct message to the MS, and sends signaling information to the Alternate Carrier, Action Block (110). The Mobile Station then re-originates the call over the Control Channel to which it has been tuned in response to the re-direct message. The Primary Service Provider then sends re-direction information over signaling network, (such as Signaling Network (60)), to the Alternate Service Provider. This re-direct information includes the called telephone number and a Mobile Station identifier, such as an International Mobile Station Identifier (IMSI), Action Block (111). The Mobile Station then sends an implicit registration to authenticate the authority of the MS to place the call to the MSC of the Alternate Service Provider, Action Block (112). Alternatively, the MS can be programmed to re-transmit the called number by activating the "send" key; this has the disadvantage that it requires a change in the telephone station. The MSC of the Alternate Service Provider checks whether a Bearer Channel is available to the Mobile Station, Test (113). If not, the call is terminated, Action Block (115), and the Mobile Station is re-set to communicate with the Primary Service Provider over the original Control Channel Frequencies, Action Block (117).

If a Bearer Channel is available (positive results of Test (113)), then the Alternate Service Provider obtains information from the Home Location Register (HLR) of the Mobile Station, Action Block (121). The Alternate Service Provider sets up a Visitor Location Register (VLR) entry for the Mobile Station, Action Block (122). The Alternate Service Provider then sets up the call, Action Block (123).

When the call is terminated, Action Block (125), the Alternate Service Provider prepares a bill record and sends the billing record to the Primary Service Provider, Action Block (127). The Alternate Service Provider then clears the temporary Visitor Location record for the Mobile Station, Action Block (129), and re-sets the Mobile Station to communicate with the Primary Service Provider, Action Block (117).

The above description is of one preferred embodiment of Applicants' invention. Other embodiments will be apparent to those of ordinary skill in the art without departing from the scope of the invention. The invention is limited only by the attached Claims.

## Claims

1. A method of establishing a wireless telecommunications call, comprising the steps of:
responsive to receipt of an origination request for a call from a mobile station;
testing whether any bearer channels are available for handling the call in a primary service provider;
if a bearer channel is available for said call in said primary service provider, using an available bearer channel of said primary service provider to establish said call;
if no bearer channel is available for said call in said primary service provider, routing said call to an alternate service provider for attempting to establish said call using an available channel of said alternate service provider.

2. The method of Claim 1, further comprising the steps of:
if said call is established using an available bearer channel of said alternate service provider, then following termination of said call, restoring said mobile station to communicate origination requests to said primary service provider.

3. The method of Claim 1, further comprising the step of:
sending a request to said mobile station to switch its control messages to a control channel of said alternate service provider in response to determining that said primary service provider has no bearer channels available for said call.

4. The method of Claim 1, further comprising the step of selecting said alternate service provider among a plurality of alternate service providers;
wherein the step of selecting comprises the step of selecting in response to traffic information provided by each of said alternate service providers.

5. The method of Claim 1, further comprising the step of said mobile station sending implicit registration information to said alternate service provider.

6. Apparatus for controlling establishment of a wireless communications call, comprising:
processor means for controlling the following steps:
responsive to receipt of an origination request from a mobile station, testing whether any bearer channels are available for handling the call in a primary service provider;
if a bearer channel is available for said call in said primary service provider, controlling establishment of said call using an available bearer channel of said primary service provider to establish said call;
if no bearer channel is available for said call in said primary service provider, controlling routing of said call to an alternate service provider for attempting to establish said call using an available channel of said alternate service provider.

7. The apparatus of Claim 6, wherein said processor means further controls the step of:
if said call is established using an available bearer channel of said alternate service provider, then following termination of said call, restoring said mobile station to communicate origination requests to said primary service provider.

8. The apparatus of Claim 6, wherein said processor means further controls the step of:
sending a request to said mobile station to switch its control messages to a control channel of said alternate service provider in response to determining that said primary service provider has no bearer channels available for said call.

9. The apparatus of Claim 6, wherein said processor means further controls the step of selecting said alternate service provider among a plurality of alternate service providers;
wherein the step of selecting comprises the step of selecting in response to traffic information provided by each of said alternate service providers.

10. The apparatus of Claim 6, wherein said processor means further controls the step of requesting said mobile station to send implicit registration information to said alternate service provider.
